# EUROPÄISCHE PATENTANMELDUNG

(11) **EP 4 389 995 A1**
(43) Veröffentlichungstag der Anmeldung: **26.06.2024**
(21) Anmeldenummer: 23218129.7
(22) Anmeldetag: 19.12.2023
(51) Int. Cl.: E03C 1/04, F16K 35/02, F16K 35/06

(54) **TRINKWASSERARMATUR**

(30) Priorität: 23.12.2022 DE 202022107222 U
(71) Anmelder: Gebr. Kemper GmbH + Co. KG, 57462 Olpe (DE)
(72) Erfinder: Weber, Fabian, 57439 Attendorn (DE)
(74) Vertreter: Grünecker Patent- und Rechtsanwälte PartG mbB

(57) **Zusammenfassung**

Trinkwasserarmatur mit einem Gehäuse (20) mit

- einer Einlassöffnung und einer Auslassöffnung und einem dazwischen vorgesehenen Ventilsitz,
- einem Ventilkörper, der dichtend gegen den Ventilsitz anlegbar und über eine Welle (22) stellbar ist,
- einem Drehgriff (2) zur manuellen Betätigung der Trinkwasserarmatur mittels Drehmomentübertragung auf die Welle (22),
- einem Drehmomentbegrenzer (36, 90) zwischen Drehgriff (2) und Welle (22), sowie mit
- einer Sicherung (12, 64) gegen unbefugtes Betätigen der Trinkwasserarmatur.

Schutz der Trinkwasserarmatur vor Wasserdiebstahl und Vandalismus.

## Beschreibung

Die vorliegende Erfindung betrifft eine Trinkwasserarmatur mit einem Gehäuse mit einer Einlassöffnung und einer Auslassöffnung und einem dazwischen vorgesehenen Ventilsitz, sowie einem Ventilkörper, der dichtend gegen den Ventilsitz anlegbar und über eine Welle stellbar ist, und einem Drehgriff zur manuellen Betätigung der Trinkwasserarmatur mittels Drehmomentübertragung auf die Welle.

Die Trinkwasserarmatur kann insbesondere als frostsichere Auslaufarmatur ausgebildet sein. Frostsichere Auslaufarmaturen umfassen üblicherweise ein Zwischenrohr, das einen die Einlassöffnung und den Ventilsitz aufweisenden Teil der Armatur im Inneren eines Gebäudes mit einem die Auslassöffnung und den Drehgriff aufweisenden Teil der Armatur an einer Gebäudeaußenwand miteinander verbindet.

Zum Schutz der Trinkwasserarmatur vor Wasserdiebstal und Vandalismus ist die Trinkwasserarmatur mit einer Sicherung gegen unbefugtes Betätigen der Trinkwasserarmatur versehen. Die Sicherung kann beispielsweise ein mechanisches Schloss oder eine elektronische Steuerungseinheit mit Mitteln zur Authentisierung umfassen.

Nach einer bevorzugten Weiterbildung der vorliegenden Erfindung umfasst die Trinkwasserarmatur einen Drehmomentübertrager mit einer Drehmoment-aufnehmenden Seite und einer Drehmoment-weitergebenden Seite, der zur Kopplung und Entkopplung von Drehgriff und Welle bewegbar, vorzugsweise axial verschiebbar ist. Der Drehmomentübertrager wirkt in der Regel derart mit der Sicherung zusammen, dass der Drehmomentübertrager durch ein Entsichern der Sicherung bewegt bzw. verschoben wird und den Drehgriff mit der Welle koppelt. Als Kopplung wird hierbei insbesondere eine zur Übertragung von Drehmoment geeignete Verbindung verstanden. Vorzugsweise ist der Drehmomentübertrager in einer in Bezug auf die Welle axialen Richtung verschiebbar. Der Drehmomentübertrager kann ein Bestandteil des Drehgriffs sein.

Nach einer weiteren bevorzugten Weiterbildung der vorliegenden Erfindung umfasst die Trinkwasserarmatur einen Schließzylinder zum Bewegen bzw. Verschieben des Drehmomentübertragers. Für gewöhnlich hat der Schließzylinder ein Schloss, das durch einen dazu passenden Schlüssel entriegelt und verriegelt werden kann. Der Schließzylinder kann in der zuvor beschriebenen Art und Weise mit dem Drehmomentübertrager zusammenwirken. Auch der Schließzylinder kann ein Bestandteil des Drehgriffs sein.

Nach einer weiteren bevorzugten Weiterbildung der vorliegenden Erfindung umfasst der Drehgriff eine drehbare mit dem Gehäuse verbundene Hülse, die mit der Drehmoment-aufnehmenden Seite des Drehmomentübertragers zusammenwirkt, wobei die Hülse vorzugsweise durch eine Mutter mit dem Gehäuse verbunden ist. Der Drehmomentübertrager ist vorzugsweise in die Hülse aufgenommen. Insbesondere können der Drehmomentübertrager und die Hülse konzentrisch angeordnet sein. Für gewöhnlich wirkt die Innenseite der Hülse mit der Außenseite des Drehmomentübertragers zusammen. D.h. die Außenseite des Drehmomentübertragers kann die Drehmoment-aufnehmende Seite sein. Die Richtungsangaben innen und außen beziehen sich hierbei auf eine radiale Richtung, die radial in Bezug auf die axiale Richtung ist. Die Außenseite der Hülse bildet üblicherweise einen Griff. Sie kann ein Profil aufweisen, um die Haptik zu verbessern. Die Mutter sichert den Drehgriff in axialer Richtung, erlaubt aber ein Verdrehen des Drehgriffs relativ zum Gehäuse in Drehrichtung des Drehgriffs. Der Schließzylinder kann in eine Öffnung eingesetzt sein, die in einer der Welle abgewandten Stirnseite des Drehgriffs ausgebildet ist. Vorzugsweise sind der Schließzylinder und die Hülse konzentrisch angeordnet.

Nach einer weiteren bevorzugten Weiterbildung der vorliegenden Erfindung umfasst die Trinkwasserarmatur ein verdrehfest mit der Welle verbundenes Verbindungsglied, das im gekoppelten Zustand von Drehgriff und Welle mit der Drehmoment-weitergebenden Seite des Drehmomentübertragers zusammenwirkt. Die Drehmoment-weitergebende Seite des Drehmomentübertragers kann insbesondere die Innenseite des Drehmomentübertragers sein. Für gewöhnlich ist das Verbindungsglied zwischen der Welle und dem Drehmomentübertrager vorgesehen und umfasst einen verdrehfest mit der Welle verbundenen Nabenabschnitt und einen mit der Drehmoment-weitergebenden Seite des Drehmomentübertragers verdrehfest verbindbaren Wellenabschnitt. Weiter bevorzugt ist das Verbindungsglied an der Welle axial gesichert. Hierfür kann das Verbindungsglied einen Clipsmechanismus aufweisen, der zum Hintergreifen der Welle ausgebildet ist.

Nach einer weiteren bevorzugten Weiterbildung der vorliegenden Erfindung sind die Hülse und die Drehmoment-aufnehmende Seite des Drehmomentübertragers so geformt, dass kein höheres als zum ordnungsgemäßen Schließen der Trinkwasserarmatur benötigtes Drehmoment übertragbar ist. Beispielsweise können die Innenseite der Hülse und die Außenseite des Drehmomentübertragers so geformt sein, dass die Hülse in Schießdrehrichtung des Drehgriffs über den Drehmomentübertrager bei Erreichen eines Grenzdrehmoments hinweggleitet. Die Drehmoment-aufnehmende Seite des Drehmomentübertragers ist vorzugsweise so konfiguriert, dass sie in Schließdrehrichtung des Drehgriffs nur Drehmomente unterhalb eines Grenzdrehmoments aufnehmen kann. Dadurch lassen sich Beschädigungen an den Komponenten der Trinkwasserarmatur durch zu kräftiges Schließen vermeiden. Insbesondere bei frostsicheren Auslaufarmaturen kann aufgrund des Nachlaufens von Wasser aus der Trinkwasserarmatur bei dem Benutzer der Trinkwasserarmatur der falsche Eindruck entstehen, der Ventilkörper sei noch nicht zur Anlage an den Ventilsitz gelangt, sodass der Drehgriff weiter zugedreht wird, was bei einer herkömmlichen Armatur zu einer übermäßigen Beanspruchung des Ventilkörpers bzw. des Ventilsitzes führen würde.

Nach einer weiteren bevorzugten Weiterbildung der vorliegenden Erfindung hat die Drehmoment-aufnehmende Seite des Drehmomentübertragers zumindest einen elastisch verformbaren Bereich, der von zumindest einem Mitnehmerabschnitt der Hülse drehmomentabhängig verformt und übersprungen wird. Die drehmomentabhängige Verformung durch die Mitnehmerabschnitte kann ab Erreichen des Grenzdrehmoments eintreten. Jeweils zwei Mitnehmerabschnitte können Rastmulden an der Innenseite der Hülse begrenzen.

Der Drehmomentübertrager kann einen im Wesentlichen zylindrischen Grundkörper haben, von dem mehrere Rastklinken, vorzugsweise einteilig, nach außen abragen. Die Rastklinken können gekrümmt oder gerade sein und/oder sich in einer zum Grundkörper tangentialen Richtung erstrecken. Sie sind vorzugsweise in die ein Schließen der Trinkwasserarmatur bewirkende Schließdrehrichtung des Drehgriffs geneigt. Die Rastklinken können die zuvor genannten elastisch verformbaren Bereiche bilden. Sie sind vorzugsweise mit den Rastmulden in Eingriff, wobei die Anzahl der Rastmulden größer sein kann als die Anzahl der Rastklinken und den Rastmulden zumindest eine Rampenfläche zugeordnet ist, über welche die Rastklinken bei Erreichen eines Grenzdrehmomentes im Rahmen der Drehbewegung beim Absperren der Trinkwasserarmatur aus der jeweiligen Rastmulde herausgleiten. Die Rastklinken sind vorzugsweise mit gleichen Abständen in Umfangsrichtung des Drehmomentübertragers angeordnet und umrunden diesen.

Bei einer Drehung des Drehgriffs in Schließdrehrichtung mit einem Drehmoment unterhalb des Grenzdrehmomentes wird das Drehmoment durch Anlage der Rastklinken an den Mitnehmerabschnitten auf den Drehmomentübertrager übertragen, der das Drehmoment an das Verbindungsglied weitergibt, sofern er mit dem Verbindungsglied infolge des Entsicherns der Sicherung gekoppelt ist. Ist die Trinkwasserarmatur ordnungsgemäß geschlossen und es wird weiter zugedreht, erreicht das Drehmoment ein Grenzdrehmoment, welches bewirkt, dass die Anlage zwischen den Mitnehmerabschnitten und den Rastklinken aufgelöst wird. Die Mitnehmerabschnitte und die Rastmulden gleiten daraufhin über die Rastklinken hinweg. Dabei werden die Rastklinken an den Rampenflächen nach innen gedrückt und federn nach dem Abgleiten über die Rampenfläche in der nächsten Rastmulde elastisch wieder zurück nach außen. Bei dem Zurückfedern stoßen die Rastklinken vorzugsweise gegen die Rampenfläche der nächsten Rastmulde an, was ein charakteristisches akustisches Signal erzeugt, das dem Benutzer signalisiert, dass die ordnungsgemäße Schließstellung erreicht ist.

Nach einer weiteren bevorzugten Weiterbildung der vorliegenden Erfindung liegen die Rastklinken bei einer Drehung des Drehgriffes in eine ein Öffnen der Trinkwasserarmatur bewirkenden Öffnungsdrehrichtung formschlüssig gegen eine die Rastmulde begrenzende Flanke an. Dadurch ist ein Öffnen der Trinkwasserarmatur mit voller Drehmomentübertragung möglich, sofern der Drehmomentübertrager mit dem Verbindungsglied infolge des Entsicherns der Sicherung gekoppelt ist. Die Drehmomentübertragung in Öffnungsdrehrichtung ist für gewöhnlich nicht begrenzt.

Nach einer weiteren bevorzugten Weiterbildung der vorliegenden Erfindung liegt das Grenzdrehmoment zwischen 0,5 Nm und 4 Nm, bevorzugt zwischen 1 Nm und 3 Nm, und besonders bevorzugt zwischen 1,5 Nm und 2 Nm. Das Grenzdrehmoment ist in der Regel durch die Form und die Materialbeschaffenheit der Rastklinken und die Form der Rastmulden bestimmt.

Nach einer weiteren bevorzugten Weiterbildung der vorliegenden Erfindung sind der Drehmomentübertrager und die Hülse aus Kunststoff gebildet. Nach einer alternativen bevorzugten Weiterbildung ist die Hülse aus Metall und der Drehmomentübertrager aus Kunststoff.

Nach einer weiteren bevorzugten Weiterbildung der vorliegenden Erfindung umfasst die Trinkwasserarmatur einen Träger, der in die Hülse aufgenommen ist und den Drehmomentübertrager axial verschieblich trägt. Der Träger kann Teil des Drehgriffs sein und die stirnseitige Öffnung zum Einsetzen des Schließzylinders ausbilden. Vorzugsweise trägt der Träger sowohl den Schließzylinder als auch den Drehmomentübertrager. Der Träger kann konzentrisch in der Hülse angeordnet sein.

Nach einer weiteren bevorzugten Weiterbildung der vorliegenden Erfindung trägt der Träger auch das Verbindungsglied, sodass der Träger über das an der Welle axial gesicherte Verbindungsglied axial gesichert ist. Vorzugsweise ist zwischen dem Verbindungsglied und dem Drehmomentübertrager eine Feder vorgesehen, sodass der Drehmomentübertrager mit seiner der Welle abgewandten Stirnseite gegen den Schließzylinder anliegt und in axialer Richtung gegen diesen vorgespannt ist. Die Feder kann sich mit einem Ende am Drehmomentübertager und mit dem anderen Ende am Verbindungslieds abstützen. Die Sicherung ist in der Regel so konfiguriert, dass der Drehmomentübertrager durch Entsichern derselben durch einen Mechanismus des Schließzylinders entgegen der Federvorspannung axial verschoben wird, sodass die Drehmoment-weitergebende Seite des Drehmomentübertragers mit dem Verbindungsglied gekoppelt wird. Das Zusammenwirken zwischen der Drehmoment-aufnehmenden Seite des Drehmomentübertragers und der Hülse bleibt von dieser axialen Verschiebung in der Regel unberührt. Die Rastmulden an der Innenseite der Hülse können eine entsprechend ausreichende axiale Erstreckung haben.

Nach einer weiteren bevorzugten Weiterbildung der vorliegenden Erfindung trägt der Träger den Schließzylinder drehbar und axial unverschieblich, wobei der Schließzylinder ein an der Hülse freiliegendes Schloss hat und auf der dem Schloss gegenüberliegenden Seite ein Stellelement trägt, das gegen eine axiale Verschiebung gesichert ist und verdrehfest mit dem Schließzylinder verbunden ist, wobei der Drehmomentübertrager in Richtung des Stellelements vorgespannt ist, und wobei das Stellelement durch Drehen des Schließzylinders mit Abschnitten des Drehmomentübertragers mit unterschiedlicher axialer Erstreckung zusammenwirkt, um den Drehmomentübertrager in axialer Richtung zu verschieben.

Die Sicherung wird für gewöhnlich durch Entriegeln des Schlosses entsichert, wobei der Schließzylinder gedreht wird. Dadurch wird das Stellelement von einer ersten Position, in der es mit Abschnitten des Drehmomentübertragers mit kleinerer axialer Erstreckung zusammenwirkt, in eine zweite Position verschwenkt, in der es mit Abschnitten des Drehmomentübertragers mit größerer axialer Erstreckung zusammenwirkt. Da das Stellelement selbst axial unverschieblich vorgesehen ist, wird der Drehmomentübertrager bei dem Verschwenken des Stellemelement von der ersten in die zweite Position unter Komprimierung der Feder axial verschoben. Die Wegstrecke der axialen Verschiebung entspricht dem Unterschied in der axialen Erstreckung der genannten Abschnitte des Drehmomentübertragers. Diese Wegstrecke ist in der Regel so konfiguriert, dass der Drehmomentübertrager und das Verbindungsglied in der ersten Position des Stellelements voneinander entkoppelt und in der zweiten Position des Stellelements gekoppelt sind.

Nach einer alternativen bevorzugten Ausführungsform der vorliegenden Erfindung kann auf das Verbindungsglied verzichtet werden. Die übrigen Komponenten können aber im Wesentlichen gleich ausgebildet sein. Dabei kann die Feder beispielsweise mit einem Ende am Gehäuse und mit dem anderen Ende am Drehmomentübertrager anliegen. Jedenfalls wird der Drehmomentübertager wie zuvor beschrieben auch bei dieser Ausführungsform durch Verschwenken des Stellelements von der ersten Position in die zweite Position unter Komprimieren der Feder axial verschoben. Allerdings wird der Drehmomentübertager dann nicht auf den Wellenabschnitt des Verbindungsglieds, sondern direkt auf die Welle aufgeschoben. Die Kontur und der Durchmesser der Drehmoment-weitergebenden Seite des Drehmomentübertragers ist bei dieser alternativen Ausführungsform an das Profil und den Durchmesser der Welle anzupassen.

Nach einer weiteren bevorzugten Weiterbildung der vorliegenden Erfindung hat der Träger zumindest eine sich nach radial innen erstreckende Rastnase, an der ein der Feder gegenüberliegendes Ende des Verbindungsglieds anliegt. Die Rastnasen können an freien Enden von länglichen Trägerarmen ausgebildet sein, die mit einem zylindrischen und den Schließzylinder tragenden Grundkörper des Trägers verbunden sind, wobei die elastisch verformbaren Bereiche der Drehmoment-aufnehmenden Seite in Umfangsrichtung zwischen den Trägerarmen vorgesehen sind und die Trägerarme in radialer Richtung überragen. Das Verbindungsglied, der Drehmomentübertrager, die dazwischen vorgesehene Feder und der Schließzylinder mit dem Stellelement sind durch den Träger zu einer baulichen Einheit gefügt, die als Schloßpatrone bezeichnet werden kann. Die Schloßpatrone stellt die Funktion der gesicherten Kopplung und Entkopplung zwischen der Welle und dem Drehgriff sowie die Funktion einer Drehmomentbegrenzung in Schließdrehrichtung bereit. Sie bildet daher nicht nur eine bauliche Einheit, sondern auch eine funktionale Einheit. Die Schließpatrone kann zusammen mit der Hülse den Drehgriff bilden, der für sich erfindungswesentlich sein kann und zusammen mit der Mutter ein Anschlussset zum Anschluss eines Drehgriffs an eine Welle einer Trinkwasserarmatur bilden kann.

Nach einer weiteren bevorzugten Weiterbildung der vorliegenden Erfindung umfasst die Trinkwasserarmatur eine Abdeckplatte, die an einer Schulter der Hülse anliegt und vorzugsweise den Träger in axialer Richtung sichert.

Weiter bevorzugt weist der Träger neben der stirnseitigen Öffnung eine Kontur auf, durch die ein längliches Werkzeug zur Ausübung einer Hebelwirkung auf den Schließzylinder angesetzt werden kann, wobei die Kontur vorzugsweise durch die Abdeckplatte abgedeckt ist. Die Abdeckplatte kann ringförmig sein und mit Ausnahme einer Aussparung zum Ansetzen eines Werkzeugs zum Aushebeln der Abdeckplatte im Wesentlichen bündig mit dem Schließzylinder und/oder einem Rand der Hülse sein.

Nach einer weiteren bevorzugten Weiterbildung der vorliegenden Erfindung ist die Trinkwasserarmatur als frostsichere Trinkwasserarmatur ausgebildet. Das Gehäuse umfasst dann ein Einlassgehäuse, das die Einlassöffnung und den Ventilsitz aufweist, ein Auslassgehäuse, das die Auslassöffnung aufweist, und ein das Einlassgehäuse und das Auslassgehäuse verbindendes Zwischenrohr. Das Zwischenrohr ist derart bemessen, dass das Einlassgehäuse im Innenbereich eines Gebäudes und das Auslassgehäuse eine Außenwand des Gebäudes überragend angeordnet werden können. Das Zwischenrohr umgibt ein Stellglied, das auf der einen Seite mit dem Ventilkörper verbunden ist und auf der anderen Seite mit einer Spindel in Eingriff steht, welche von dem Auslassgehäuse getragen ist und die Welle umfasst. Die frostsichere Trinkwasserarmatur weist außerdem ein Belüftungsventil auf, das eine Belüftungsöffnung freigibt, wenn der Ventilkörper dichtend gegen den Ventilsitz anliegt. Für gewöhnlich wird das Belüftungsventil bei geöffneter Armatur durch das unter Druck stehende Wasser verschlossen. Durch das Schließen der Armatur sinkt der Druck auf Atmosphärendruck, so dass das Belüftungsventil öffnet und Luft einströmen kann.

In einem nebengeordneten Aspekt gibt die vorliegende Erfindung eine Trinkwasserarmatur mit einem Gehäuse mit einer Einlassöffnung und einer Auslassöffnung und einem dazwischen vorgesehenen Ventilsitz, sowie einem Ventilkörper, der dichtend gegen den Ventilsitz anlegbar und über eine Welle stellbar ist, und einem Drehgriff zur manuellen Betätigung der Trinkwasserarmatur mittels Drehmomentübertragung auf die Welle an, wobei die Trinkwasserarmatur Mittel zur Begrenzung eines übertragbaren Drehmoments aufweist. Vorzugsweise ist die Trinkwasserarmatur nach einer oder mehreren der zuvor beschriebenen bevorzugten Weiterbildungen ausgestaltet. Die Mittel zur Begrenzung eines übertragbaren Drehmoments können insbesondere durch die Rastklinken des Drehmomentbegrenzers und die Rastmulden der Hülse gebildet sein.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: eine perspektivische Seitenansicht auf einen Drehgriff einer Trinkwasserarmatur gemäß dem Ausführungsbeispiel,
- Fig. 2: eine perspektivische Seitenansicht auf die am Gehäuse der Trinkwasserarmatur freiliegende Welle, sowie die Hülse, die Mutter, die Schloßpatrone und die Abdeckplatte jeweils mit zugehörigem Pfeil in Fügerichtung,
- Fig. 3: die Bauteile der Schließpatrone in Explosionsdarstellung,
- Fig. 4: eine Längsschnittansicht des Drehgriffs aus Fig. 1 mit Mutter,
- Fig. 5: eine transparente perspektivische Seitenansicht der Schließpatrone in entkoppeltem Zustand von Drehmomentübertrager und Verbindungsglied,
- Fig. 6: eine transparente perspektivische Seitenansicht der Schließpatrone in gekoppeltem Zustand von Drehmomentübertrager und Verbindungsglied,
- Fig. 7: eine Längsschnittansicht zu Fig. 6, und
- Fig. 8: eine Querschnittansicht des Drehgriffs auf axialer Höhe der Rastklinken.

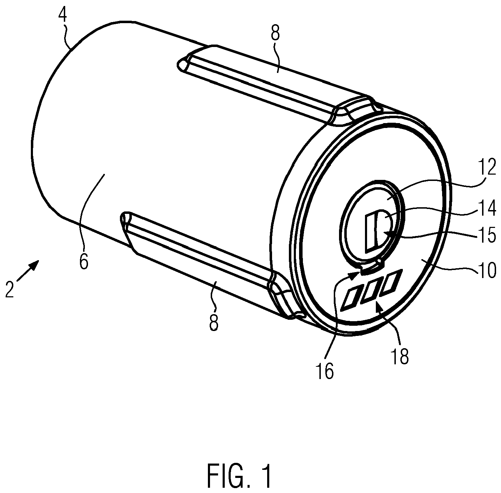

Die Figur 1 zeigt einen Drehgriff 2 einer Trinkwasserarmatur gemäß einem Ausführungsbeispiel. Der Drehgriff 2 umfasst eine Hülse 4, die an ihrer Außenseite 6 mehrere aus ihrer zylindrischen Mantelfläche nach außen hervorstehende Erhebungen 8 aufweist. Die Erhebungen 8 erleichtern die manuelle Übertragung eines Drehmoments auf die Hülse 4. Eine stirnseitige Öffnung der Hülse 4 ist durch eine ringförmige Abdeckplatte 10 abgedeckt, wobei in dem zentralen Loch der ringförmigen Abdeckplatte 10 ein Schließzylinder 12 mit einem Schloss 14 freiliegt. Das Schloss 14 bildet eine Sicherung 15 gegen unbefugtes Betätigen der Trinkwasserarmatur, da der Schlüssel zu dem Schloss 14 nur befugten Personen ausgehändigt wird. Die Abdeckplatte 10 hat angrenzend an ihr zentrales Loch eine Aussparung 16, in die ein Werkzeug einsetzbar ist, um die Abdeckplatte 10 herauszuheben. Unterhalb der Aussparung 16 weist die Abdeckplatte 10 eine in die Abdeckplatte 10 eingeprägtes Markenzeichen 18 in Form von einer Reihe aus drei gleichen Trapezen auf.

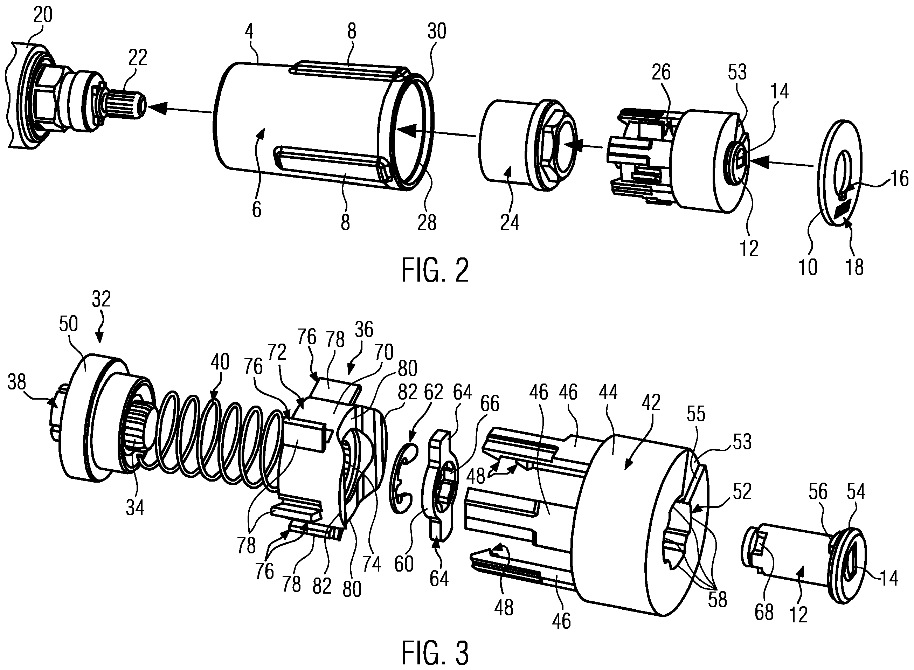

Die Figur 2 zeigt den Teil eines Gehäuses 20 der Trinkwasserarmatur gemäß dem Ausführungsbeispiel, an dem eine Welle 22 freiliegt, die zu einer Spindel zur Stellung eines Ventilkörpers relativ zu einem Ventilsitz gehört. Die Welle 22 wird mit dem Drehgriff 2 verbunden. Hierfür wird die Hülse 4 mit einer Mutter 24 so am Gehäuse 20 befestigt, dass die Hülse 4 axial am Gehäuse 20 gesichert und in seiner Umfangsrichtung relativ zum Gehäuse 20 verdrehbar ist. Eine als Schloßpatrone bezeichnete Baugruppe 26, die den Schließzylinder 12 trägt, wird auf die Welle 22 aufgeschoben und axial an der Welle 22 gesichert. Dabei nimmt die Hülse 4 die Schloßpatrone 26 in sich auf. Stirnseitig wird die Schlosspatrone 26 durch die Abdeckplatte 10 abgedeckt, wobei der Schließzylinder 12, wie aus Figur 1 ersichtlich, in dem zentralen Loch der Abdeckplatte 10 freiliegt. Die Abdeckplatte 10 liegt auf einer Ringschulter 28 der Hülse 4 auf und schließt bündig und passgenau mit dem Rand 30 der Hülse ab. Durch die Passgenauigkeit erfährt die Abdeckplatte 10 eine gewisse Haltekraft, die die Schlosspatrone 26 zusätzlich in axialer Richtung sichert.

Wie aus Figur 3 ersichtlich umfasst die Schlosspatrone 26 ein Verbindungsglied 32. Das Verbindungsglied 32 hat einen Nabenabschnitt, der zur verdrehfesten Verbindung mit der Welle 22 auf dieselbe aufgeschoben wird, und einen Wellenabschnitt 34, der verdrehfest mit einem Drehmomentübertrager 36 verbindbar ist. Das Verbindungsglied 32 ist außerdem mit einem Clipsmechanismus 38 versehen, der angepasst ausgebildet ist, die Welle 22 zu hintergreifen, um das Verbindungsglied 32 in axialer Richtung zu sichern. Zwischen dem Verbindungsglied 32 und dem Drehmomentübertrager 36 ist eine Feder 40 vorgesehen.

Das Verbindungsglied 32 und der Drehmomentübertrager 36 werden von einem Träger 42 getragen wobei sich die Feder 40 mit einem Ende an dem Verbindungsglied 32 und mit dem anderen Ende an dem Drehmomentübertragung 36 abstützt. Der Träger 42 hat einen im Wesentlichen zylindrischen Grundkörper 44, von dem in axialer Richtung mehrere längliche Trägerarme 46 abragen. Das freie Ende der Trägerarme 46 ist jeweils mit einer sich nach radial innen erstreckenden Rastnase 48 ausgebildet. Die Rastnasen 48 hintergreifen einen Flansch 50 des Verbindungsglieds 32. Da das Verbindungsglied 32 axial gesichert ist, wird dadurch auch der Träger 42 axial gesichert.

Der Schließzylinder 12 ist in eine Durchgangsöffnung 52 eingesetzt, die den Grundkörper 44 des Trägers 42 in axialer Richtung durchsetzt. Mit einem Flanschabschnitt 54 liegt der Schließzylinder 12 am stirnseitigen Rand der Durchgangsöffnung 52 an (vgl. Figur 2). Der Träger 42 hat zudem eine gegenüber der Durchgangsöffnung 52 zurückversetzte Kontur 55 für ein Werkzeug zur Ausübung einer Hebelwirkung auf den Schließzylinder 12 im Rahmen der Demontage. Schließplättchen 56 des Schließzylinders 12 passen in entsprechende Rillen 58 der Durchgangsöffnung 52, sodass der Schließzylinder 12 in Umfangsrichtung formschlüssig in die Durchgangsöffnung 52 eingesetzt ist. Durch den passenden Schlüssel für das Schloss 14 können die Schließplättchen 56 aus den Rillen 58 heraus bewegt und der Formschluss in Umfangsrichtung aufgehoben werden. D.h. indem der richtige Schlüssel in das Schloss 14 eingeführt wird, kann der Schließzylinder 12 gedreht werden. Auf der dem Schloss 14 gegenüberliegenden Seite trägt der Schließzylinder 12 ein Stellelement 60, dass mit einer Sicherungsscheibe 62 axial am Schließzylinder 12 gesichert ist. Das Stellelement 60 hat die Form eines Rings, von dem zwei diametrale Stellarme 64 nach außen abragen. An der Innenseite des Rings sind radiale Vorsprünge 66 ausgebildet, die mit Einkerbungen 68 am Schließzylinder 12 in Eingriff sind. Das Stellelement 60 ist dadurch verdrehfest mit dem Schließzylinder 12 verbunden.

Der Drehmomentübertrager 36 hat einen im Wesentlichen zylindrischen Grundkörper 70, wobei die Außenseite des zylindrischen Grundkörpers 70 als Drehmoment-aufnehmende Seite 72 und die Innenseite des zylindrischen Grundkörpers 70 als Drehmoment-weitergebende Seite 74 ausgebildet sind. Die Drehmoment-aufnehmende Seite 72 hat mehrere elastisch verformbare Bereiche 76, die durch Rastklinken 78 gebildet sind, welche in einer zu dem zylindrischen Grundkörper 70 tangentialen Richtung von dem Grundkörper 70 abragen. Die Rastklinken 78 wirken zur Drehmomentaufnahme mit der Innenseite der Hülse 4 zusammen, wobei die Rastklinken 78 und die Innenseite der Hülse 4 so geformt sind, dass kein höheres als zum ordnungsgemäßen Schließen der Trinkwasserarmatur benötigtes Drehmoment übertragbar ist.

Die Drehmoment-weitergebende Seite 74 ist als Nabe ausgebildet, deren Kontur zu dem Profil des Wellenabschnitts 34 des Verbindungsglied 32 passt. Dementsprechend ist die Drehmoment-weitergebende Seite 74 verdrehfest mit dem Wellenabschnitt 34 verbindbar, indem die Feder 40 komprimiert wird. Dies geschieht, indem die Stellarme 64 des Stellelements 60 von einer ersten Position, in der die Stellarme 64 gegen einen Abschnitt 80 des Drehmomentübertragers 36 mit geringerer axialer Erstreckung anliegen, durch eine Drehung des Schließzylinders 12 um 90° in eine zweite Position verschwenkt werden, in der die Stellarme 64 des Stellelements 60 gegen Abschnitte 82 des Drehmomentübertragers 36 mit größerer axialer Erstreckung anliegen. Dabei wird der Drehmomentübertrager 36 entgegen der Federkraft der Feder 40 so weit in Richtung des Verbindungsglieds 32 verschoben, dass die Drehmoment-weitergebende Seite 74 auf den Wellenabschnitt 34 aufgeschoben wird. In Umfangsrichtung sind die genannten Abschnitte durch eine Rampe miteinander verbunden, was das Verschwenken des Stellelements 60 erleichert. Nach alledem ist ersichtlich, dass der Drehgriff 2 durch Entriegeln des Schlosses 14 und Drehen des Schließzylinders 12 mit der Welle 22 ge- und entkoppelt wird, nachdem das Verbindungsglied 32 verdrehfest mit der Welle 22 verbunden wurde.

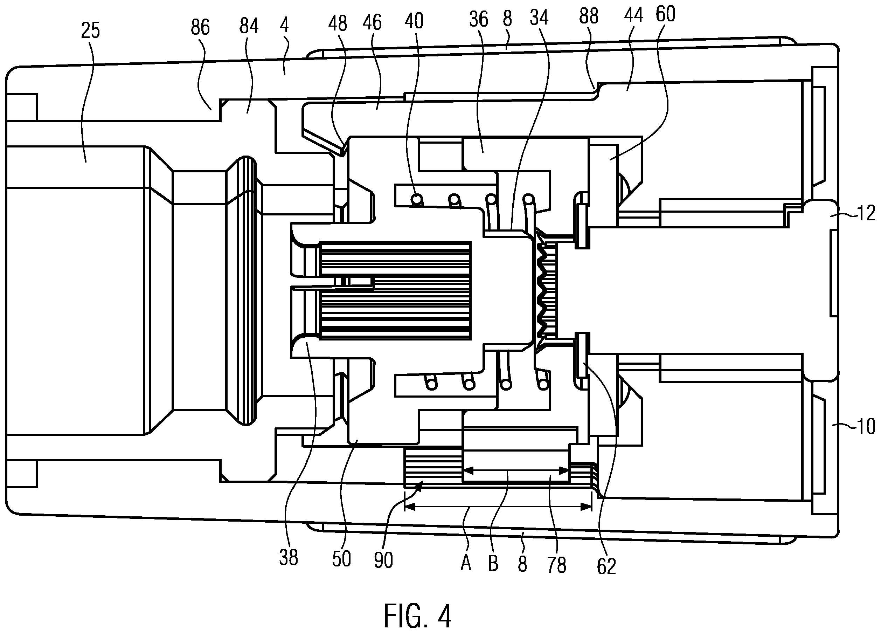

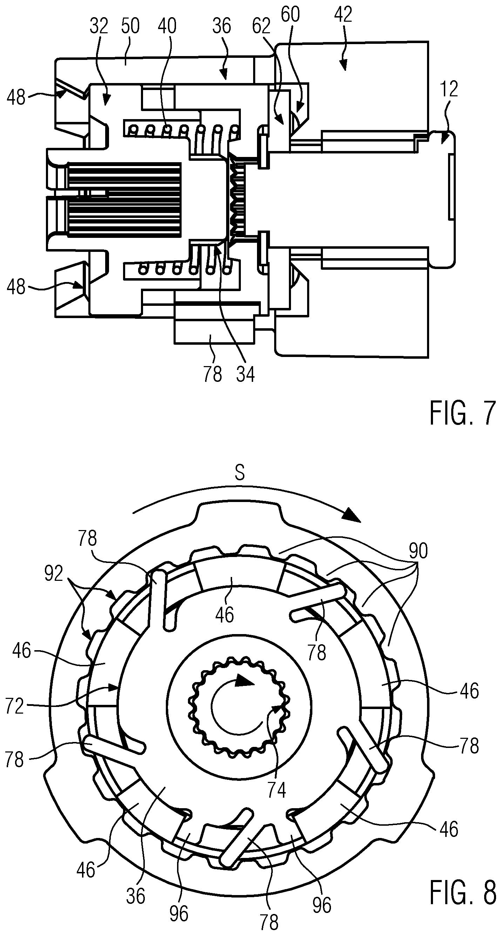

Die Figur 4 zeigt den Drehgriff aus Figur 1 in einer Längsschnittansicht, wobei die Mutter 24 in die Hülse 4 aufgenommen ist und mit einem Flanschabschnitt 84 an einer zweiten inneren Stufe 86 der Hülse 4 anliegt. An einer ersten inneren Stufe 88 der Hülse 4 liegt der zylindrische Grundkörper 44 des Trägers 42 an. Zwischen der ersten inneren Stufe 88 und der zweiten inneren Stufe 86 sind an der Innenseite der Hülse 4 Mitnehmerabschnitte 90 ausgebildet, die die verformbaren Bereiche 76, d.h. die Rastklinken 78, drehmomentabhängig verformen und überspringen (siehe hierzu auch Fig. 8). Die Mitnehmerabschnitte 90 sind zwischen rillenförmigen Rastmulden 92 ausgebildet. Sowohl die Mitnehmerabschnitte 90 als auch die Rastmulden 92 haben eine gewisse axiale Erstreckung, die in Figur 4 mit A gekennzeichnet und größer ist als die axiale Erstreckung der Rastklinken 78 ist, die in Figur 4 mit B gekennzeichnet ist. Dadurch werden die Rastklinken 78 bei einer Verschiebung des Drehmomentübertragers 36 in Folge des Entriegelns des Schlosses 14 und des Drehens des Schließzylinders 12 in den Rastmulden 92 geführt.

Die drehmomentabhängige Verformung durch die Mitnehmerabschnitte 90 erfolgt, wenn durch Drehen des Drehgriffs 2 in eine ein Schließen der Trinkwasserarmatur bewirkenden Schließdrehrichtung S (siehe Fig. 8) ein Grenzdrehmoment erreicht wird. Die Rastklinken 78, die ansonsten mit den Rastmulden 92 in Eingriff sind, werden dann von einer Rampenfläche 94 der Rastmulden 92 nach radial innen gedrückt, sodass die Rastmulden 92 über die Rastklinken 78 hinweggleiten. Dabei federn die Rastklinken 78 nach dem Abgleiten über die Rampenfläche 94 in der nächsten Rastmulde 92 elastisch zurück nach außen. Bei dem Zurückfedern stoßen die Rastklinken 78 gegen die Rampenfläche 94 der nächsten Rastmulde 92 an, was ein charakteristisches akustisches Signal erzeugt, das dem Benutzer signalisiert, dass die ordnungsgemäße Schließstellung erreicht ist.

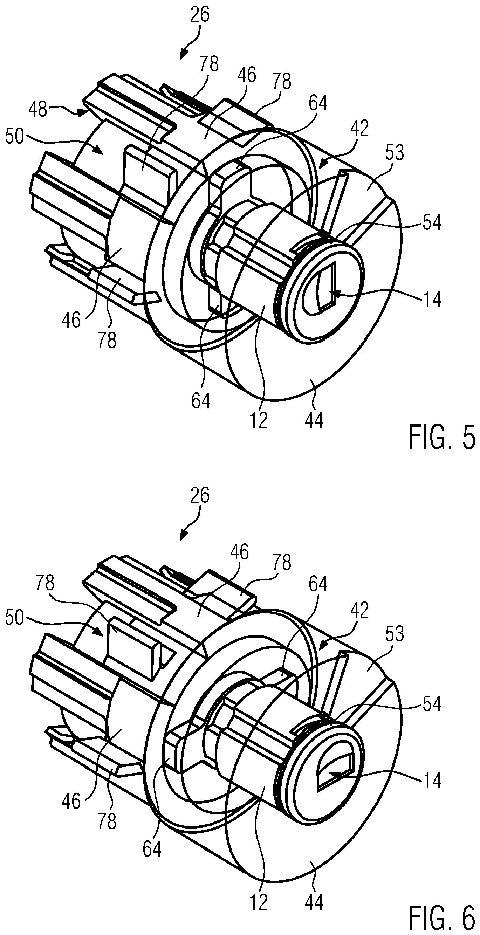

Die Figur 4 zeigt den Drehgriff 2 in entkoppeltem Zustand; d.h. das Stellelement 60 ist in der ersten Position. Die Figur 5 zeigt die Schließpatrone 26 in diesem entkoppelten Zustand in einer transparenten perspektivischen Seitenansicht. Die Figur 6 zeigt die Schließpatrone 26 in dem gekoppelten Zustand in einer transparenten perspektivischen Seitenansicht. In dem gekoppelten Zustand ist das Stellelement 60 in der zweiten Position. Entsprechend sind der Schließzylinder 12 und das Stellelement 60 in Figur 6 gegenüber Figur 5 um 90° gedreht und der Drehmomentübertrager 36 ist in Richtung des Verbindungsglieds 32 verschoben. Die Figur 7 zeigt die zu Figur 6 gehörende Längsschnittansicht.

Aus dem Querschnitt gemäß Figur 8 geht hervor, dass einer der Rastklinken 78 zwei Anschläge 96 zugeordnet sind, die den Drehmomentübertrager 36 in Umfangsrichtung an den Trägerarmen 44 sichern.

### Bezugszeichenliste

2 Drehgriff
4 Hülse
6 Außenseite der Hülse
8 Erhebung
10 Abdeckplatte
12 Schließzylinder
14 Schloss
15 Sicherung
16 Aussparung
18 Markenzeichen
20 Gehäuse
22 Welle
24 Mutter
26 Schlosspatrone
28 Ringschulter
30 Rand
32 Verbindungsglied
34 Wellenabschnitt
36 Drehmomentübertrager
38 Clipsmechanismus
40 Feder
42 Träger
44 Grundkörper des Trägers
46 Trägerarm
48 Rastnase
50 Flansch
52 Durchgangsöffnung
54 Flanschabschnitt
55 Kontur
56 Schließplättchen
58 Rillen
60 Stellelement
62 Sicherungsscheibe
64 Stellarm
66 radialer Vorsprung
68 Einkerbung
70 Grundkörper des Drehmomentübertragers
72 Drehmoment-aufnehmende Seite
74 Drehmoment-weitergebende Seite
76 elastisch verformbarer Bereich
78 Rastklinke
80 Abschnitt mit kleinerer axialer Erstreckung
82 Abschnitt mit größerer axialer Erstreckung
84 Flanschabschnitt der Mutter
86 zweite innere Stufe
88 erste innere Stufe
90 Mitnehmerabschnitt
92 Rastmulde
94 Rampenfläche
96 Anschlag
A axiale Erstreckung der Rastmulden
B axiale Erstreckung der Rastklinken
S Schließdrehrichtung

## Patentansprüche

1. Trinkwasserarmatur mit einem Gehäuse (20) mit einer Einlassöffnung und einer Auslassöffnung und einem dazwischen vorgesehenen Ventilsitz, sowie einem Ventilkörper, der dichtend gegen den Ventilsitz anlegbar und über eine Welle (22) stellbar ist, einem Drehgriff (2) zur manuellen Betätigung der Trinkwasserarmatur mittels Drehmomentübertragung auf die Welle (22) und einer Sicherung (15) gegen unbefugtes Betätigen der Trinkwasserarmatur.

2. Trinkwasserarmatur nach Anspruch 1, **gekennzeichnet durch** einen Drehmomentübertrager (36) mit einer Drehmoment-aufnehmenden Seite (72) und einer Drehmoment-weitergebenden Seite (74), der zur Kopplung und Entkopplung von Drehgriff (2) und Welle (22) bewegbar, vorzugsweise axial verschiebbar, ist, einen Schließzylinder (12) zum Bewegen bzw. Verschieben des Drehmomentübertragers (36), wobei der Drehgriff (2) eine drehbare mit dem Gehäuse (20) verbundene Hülse (4) umfasst, die mit der Drehmoment-aufnehmenden Seite (72) des Drehmomentübertragers (36) zusammenwirkt, wobei die Hülse (4) vorzugsweise durch eine Mutter (24) mit dem Gehäuse (20) verbunden ist, und ein verdrehfest mit der Welle (22) verbundenes Verbindungsglied (32), das im gekoppelten Zustand von Drehgriff (2) und Welle (22) mit der Drehmoment-weitergebenden Seite (74) des Drehmomentübertragers (36) zusammenwirkt.

3. Trinkwasserarmatur nach Anspruch 2, **dadurch gekennzeichnet, dass** das Verbindungsglied (32) an der Welle (22) axial gesichert ist, insbesondere durch einen Clipsmechanismus (38).

4. Trinkwasserarmatur nach Anspruch 2 oder 3, **dadurch gekennzeichnet, dass** die Hülse (4) und die Drehmoment-aufnehmende Seite (72) des Drehmomentübertragers (36) so geformt sind, dass kein höheres als zum ordnungsgemäßen Schließen der Trinkwasserarmatur benötigtes Drehmoment übertragbar ist.

5. Trinkwasserarmatur nach einem der Ansprüche 2 bis 4, **dadurch gekennzeichnet, dass** die Drehmoment-aufnehmende Seite (72) des Drehmomentübertragers (36) zumindest einen elastisch verformbaren Bereich (76) hat, der von zumindest einem Mitnehmerabschnitt (90) der Hülse (4) drehmomentabhängig verformt und übersprungen wird.

6. Trinkwasserarmatur nach einem der Ansprüche 2 bis 5, **gekennzeichnet durch** einen Träger (42), der in die Hülse (4) aufgenommen ist und den Drehmomentübertrager (36) axial verschieblich trägt.

7. Trinkwasserarmatur nach Anspruch 3 und 6, **dadurch gekennzeichnet, dass** der Träger (42) auch das Verbindungsglied (32) trägt, sodass der Träger (42) über das an der Welle (22) axial gesicherte Verbindungsglied (32) axial gesichert ist.

8. Trinkwasserarmatur nach Anspruch 6 in Abhängigkeit von Anspruch 2, **dadurch gekennzeichnet, dass** der Träger (42) den Schließzylinder (12) drehbar und axial unverschieblich trägt, wobei der Schließzylinder (12) ein an der Hülse (4) freiliegendes Schloss (14) hat und auf der dem Schloss (14) gegenüberliegenden Seite ein Stellelement (60) trägt, das gegen eine axiale Verschiebung gesichert ist und verdrehfest mit dem Schließzylinder (12) verbunden ist, wobei der Drehmomentübertrager (36) in Richtung des Stellelements (60) vorgespannt ist, und wobei das Stellelement (60) durch Drehen des Schließzylinders (12) mit Abschnitten (82, 84) des Drehmomentübertragers (36) mit unterschiedlicher axialer Erstreckung zusammenwirkt, um den Drehmomentübertrager (36) in axialer Richtung zu verschieben.

9. Trinkwasserarmatur nach den Ansprüchen 2 und 8, **gekennzeichnet durch** eine Feder (40), die sich mit einem Ende am Drehmomentübertager (36) und mit dem anderen Ende am Verbindungslied (32) abstützt.

10. Trinkwasserarmatur nach Anspruch 9, **dadurch gekennzeichnet, dass** der Träger (42) zumindest eine sich nach radial innen erstreckende Rastnase (48) hat, an der ein der Feder (40) gegenüberliegendes Ende des Verbindungsglieds (32) anliegt.

11. Trinkwasserarmatur nach Anspruch 10, **dadurch gekennzeichnet, dass** die Rastnasen (48) an freien Enden von länglichen Trägerarmen (46) ausgebildet sind, die mit einem zylindrischen und den Schließzylinder tragenden Grundkörper (44) des Trägers (42) verbunden sind, wobei die elastisch verformbaren Bereiche (76) der Drehmoment-aufnehmenden Seite (72) in Umfangsrichtung zwischen den Trägerarmen (46) vorgesehen sind und die Trägerarme (46) in radialer Richtung überragen.

12. Trinkwasserarmatur nach Anspruch 6, **gekennzeichnet durch** eine Abdeckplatte (10), die an einer Schulter (28) der Hülse (4) anliegt und den Träger (42) vorzugsweise in axialer Richtung sichert.

13. Trinkwasserarmatur nach Anspruch 6 in Abhängigkeit von Anspruch 2, **dadurch gekennzeichnet, dass** der Träger (42) eine Kontur (55) aufweist, durch die ein längliches Werkzeug zur Ausübung einer Hebelwirkung auf den Schließzylinder (12) eingeführt werden kann, wobei die Kontur (55) vorzugsweise durch die Abdeckplatte (10) gemäß Anspruch 12 abgedeckt ist.

14. Trinkwasserarmatur nach einem der vorherigen Ansprüche, **dadurch gekennzeichnet, dass** das Gehäuse (20) ein Einlassgehäuse mit der Einlassöffnung, ein Auslassgehäuse mit der Auslassöffnung und ein das Einlassgehäuse und das Auslassgehäuse verbindendes Zwischenrohr umfasst, das derart bemessen ist, dass das Einlassgehäuse im Innenbereich eines Gebäudes und das Auslassgehäuse eine Außenwand des Gebäudes überragend angeordnet werden können, wobei der Ventilsitz im Einlassgehäuse vorgesehen ist und der Ventilkörper mit einem von dem Zwischenrohr umgebenden Stellglied verbunden ist, welches mit einer von dem Auslassgehäuse getragenen und mit der Welle (22) verbundenen Spindel in Eingriff steht, und wobei die Trinkwasserarmatur ein Belüftungsventil umfasst, das eine Belüftungsöffnung freigibt, wenn der Ventilkörper dichtend gegen den Ventilsitz anliegt.

15. Trinkwasserarmatur mit einem Gehäuse (20) mit einer Einlassöffnung und einer Auslassöffnung und einem dazwischen vorgesehenen Ventilsitz, sowie einem Ventilkörper, der dichtend gegen den Ventilsitz anlegbar und über eine Welle (22) stellbar ist, und einem Drehgriff (2) zur manuellen Betätigung der Trinkwasserarmatur mittels Drehmomentübertragung auf die Welle (22), vorzugsweise nach einem der vorherigen Ansprüche, **gekennzeichnet durch** Mittel zur Begrenzung eines übertragbaren Drehmoments.
